# EUROPEAN PATENT SPECIFICATION

(11) **EP 2 787 184 B1**
(45) Date of publication and mention of the grant of the patent: **01.02.2017**
(21) Application number: 11876459.6
(22) Date of filing: 31.12.2011
(51) Int. Cl.: F01M 9/10, F01M 13/02, F01M 13/04, F02B 63/02, F01M 1/04

(54) **HANDHELD FOUR-STROKE ENGINE LUBRICATING SYSTEM**
TRAGBARES VIERTAKTMOTORSCHMIERSYSTEM
SYSTÈME DE LUBRIFICATION POUR MOTEUR À QUATRE TEMPS TENU À LA MAIN

(30) Priority: 29.11.2011 CN 201120482024 U; 29.11.2011 CN 201110385313
(43) Date of publication of application: 08.10.2014
(73) Proprietor: Xingyue Group Co. Ltd., Zhejiang 321307 (CN)
(72) Inventor: HU, Jirong, Yongkang Zhejiang 321307 (CN)
(74) Representative: Kolster Oy Ab
(86) International application number: PCT/CN2011/085122
(87) International publication number: WO 2013/078749

(56) References cited:
- WO-A1-2011/048848
- WO-A1-2011/048848
- CN-Y- 2 649 780
- DE-U1-202007 009 478
- JP-A- H08 151 914
- JP-A- H10 317 931
- JP-A- H10 317 931
- JP-A- 2002 276 321
- JP-A- 2007 263 069
- US-B1- 6 213 079
- US-B1- 6 213 079

## Description

### FIELD OF THE INVENTION

The present invention relates to a handheld four-stroke engine, and particularly to a lubricating system for the handheld four-stroke engine.

### BACKGROUND OF THE INVENTION

With the progress of science and technology and the rapid development of economy, urban and rural areas take on a brand-new look, and families living conditions and material living standards are markedly improved, so that the handheld four-stroke engine mainly used for the garden instrument such as earth auger, ice auger, plough machine, lawn trimmer, etc. has been developed rapidly. Handheld small engine in the current market are mainly two-stroke engine which can operate in arbitrary orientation. However, with the growing consciousness of environment protection, the exhaust emission requirements are continuously enhanced, and it is an inevitable trend that the handheld four-stroke engine replaces the handheld two-stroke engine.

However, during use, the handheld four-stroke engine has the following disadvantages: on the one hand, during the operation of the engine, the engine has to be provided with a lubricating system which can make the lubricating oil to circulate efficiently so as to ensure the reliable operation of the crankshaft-connecting rod-piston mechanism, valve mechanism etc. in any operating attitude; however, the existing lubricating system has a complicated structure, is cumbersome for assembling and is difficult to produce due to the winding oil line, which renders that the lubricating oil cannot be transferred to each working chamber quickly and uninterruptedly, and thus decreasing the circulation efficiency of the lubricating oil to some degree. On the other hand, when the engine reverses arbitrarily during operation, due to the undesirable oil and gas separation and the poor circulation of the lubricating system, the uneven distribution of the pressure in the oil return passage within the lubricating system is produced, and the operation reliability is bad, and oil consumption is high, which affects the working efficiency of the engine directly. For this reason, many manufactures and persons with breadth of vision have performed the development and research aimed at the above mentioned disadvantages.

JP 2007-263069A discloses a four-cycle engine applicable to working machines of different types, wherein the four-cycle engine has three or more oil return passages within a valve chamber for circulating the lubrication oil. However, the oil and gas separation of the lubrication system is not good, especially when the engine operates reversely, which may deteriorate the efficiency of the lubrication system. Therefore, the conventional four-cycle engine may be further developed to address the problems existing in the prior art.

### SUMMARY OF THE INVENTION

Accordingly, in order to overcome the above mentioned disadvantages that exist in the current handheld four-stroke engine, it is an object of the present invention to provide a handheld four-stroke engine lubricating system, which has the advantages of simple structure, quick circulation speed, high lubricating efficiency, good oil/gas separation effect, and stable operation in any attitude.

To solve the technical problem, the present invention adopts a technical solution, comprising an oil storage chamber formed by a bottom casing and a lower crank case, a crankshaft chamber formed by the lower crank case and an upper crank case, an air valve chamber formed by the upper crank case and a cylinder head cover, a cam chamber formed by the upper crank case and a cam chamber cover, and a tappet chamber connected between the air valve chamber and the cam chamber, wherein the two sides of the upper and lower crank case are correspondingly provided with a first and a second oil inlet passages communicating with the oil storage chamber and the crankshaft chamber, the first and the second oil inlet passages are correspondingly provided with a first and a second check valves thereon, the first oil inlet passage is connected to a hose pressed against the bottom casing, the head of the hose is provided with a first oil suction port, the first oil inlet passage is provided with a second oil suction port, and the second oil inlet passage is provided with a third oil suction port.

An oil feeding passage with a check valve is provided between the crankshaft chamber and the air valve chamber, an oil returning passage is provided between the air valve chamber and the oil storage chamber, a third oil inlet passage is provided between the cam chamber and the crankshaft chamber, and a cam chamber oil returning passage is provided between the cam chamber and the oil storage chamber.

The bottom of the air valve chamber is provided with at least one forward oil returning hole communicating with a backflow passage, the cylinder head cover is provided with an annular oil returning slot communicating with the backflow passage, each of four orientations, i.e. the front, the back, the left and the right, around the cylinder head cover is provided with at least one side oil returning hole communicating with the annular oil returning slot, and the top of the cylinder head cover is provided with at least one reverse oil returning hole communicating with the oil returning passage.

A camshaft provided with a centrifugal separation mechanism is installed in the cam chamber. The centrifugal separation mechanism includes a separator housing, a fixing sleeve and a sieve. The separator housing is provided with a hollow cavity, and the sieve is installed in the hollow cavity. The fixing sleeve is fixed on an inner ring of the separator housing and is assembled to the camshaft. An outer ring of the separator housing is provided with a centrifugal air inlet communicating with the hollow cavity. The inner ring of the separator housing, the fixing sleeve and the camshaft are provided with a centrifugal air out passage communicating with the hollow cavity. The centrifugal air out passage connects with an air filter through a respiring passage.

The present invention has the following advantages and effects by adopting the above mentioned structure.

Firstly, because the first and the second oil inlet passages are provided between the oil storage chamber and the crankshaft chamber, and the first oil inlet passage is connected to the hose pressed against the bottom casing, the engine can suction the lubricating oil from the oil storage chamber in any operating attitude to efficiently lubricate each operating system, thereby ensuring the normal engine operation in any operating attitude.

Secondly, because the cylinder head cover is provided with the annular oil returning slot communicating with the backflow passage, and each of four orientations, i.e. the front, the back, the left and the right, around the cylinder head cover are provided with at least one side oil returning hole communicating with the annular oil returning slot, and the top of the cylinder head cover is provided with at least one reverse oil returning hole communicating with the oil returning passage, the oil suction ability of the cylinder head cover is greatly enhanced, and the lubricating oil in the air valve chamber can backflow quickly and efficiently into the oil storage chamber in any working attitude, and the cylinder head cover is prevented from appearing the phenomenon that lubricating oil accumulates and overflows, thereby ensuring the largest lubricating effect with the least amount of lubricating oil.

Thirdly, because the camshaft is provided with the centrifugal separation mechanism rotating with the camshaft when working, and the centrifugal air inlet and the inner ring of the housing, fixing sleeve and the centrifugal air out passage on the camshaft constitute the ventilating passage of the gasoline engine, the oil and gas from the cam chamber entering into the centrifugal separation mechanism are separated. The separated oil drops are thrown back into the cam chamber under the action of the centrifugal force, and the separated gas enters into the air filter and burns, which results in the effects of smooth ventilation, small air resistance, good separating effect, low loss of the lubricating oil, stable and reliable operation, and high operating efficiency.

### BRIEF DESCRIPTION OF THE DRAWINGS

Fig. 1 is a schematic view of the structure according to the present invention.
Fig. 2 is a sectional view along A-A of Fig. 1 according to the present invention.
Fig. 3 is an enlarged schematic view of the centrifugal separation mechanism according to the present invention.
Fig. 4 is a top view of the present invention when removing the air guide and the cylinder head cover.
Fig. 5 is a structural schematic diagram of the cylinder head cover according to the present invention.
Fig. 6 is a sectional view along B-B of Fig. 5 according to the present invention.
Fig. 7 is an operating schematic diagram of the present invention when the air filter oriented downwards.
Fig. 8 is an operating schematic diagram of the present invention when the muffler oriented downwards.
Fig. 9 is an operating schematic diagram when the present invention is reversed.
Fig. 10 is an operating schematic diagram of the present invention when the clutch mechanism oriented downwards.
Fig. 11 is an operating schematic diagram of the present invention when the hand pulling start mechanism oriented downwards.

Wherein, 1 oil storage chamber, 2 crankshaft chamber, 3 air valve chamber, 4 air filter, 5 check valve, 6 oil feeding passage, 7 oil returning passage, 8 forward oil returning hole, 9 the first oil suction port, 10 the second oil suction port, 11 the third oil suction port, 12 the first oil inlet passage, 13 the second oil inlet passage, 14 the third oil inlet passage, 15 the second oil inlet, 16 the first oil inlet, 17 centrifugal separation mechanism, 18 carburetor, 19 reverse oil returning hole, 20 side oil returning hole, 21 fixing sleeve, 22 centrifugal air inlet, 23 sieve, 24 centrifugal air out passage, 25 separator housing, 26 annular oil returning slot, 27 hand pulling start mechanism, 28 clutch mechanism, 29 muffler, 30 tappet chamber, 31 lower crank case, 32 bottom casing, 33 upper crank case, 34 piston, 35 crankshaft-connecting rod assembly, 36 cylinder head cover, 37 cam chamber, 38 cam chamber cover, 39 camshaft, 40 hose, 41 respiring passage, 42 bottom dead center, 43 top dead center, 44 the first check valve, 45 the second check valve, 46 cam chamber oil returning passage.

### DETAILED DESCRIPTION OF THE EMBODIMENTS

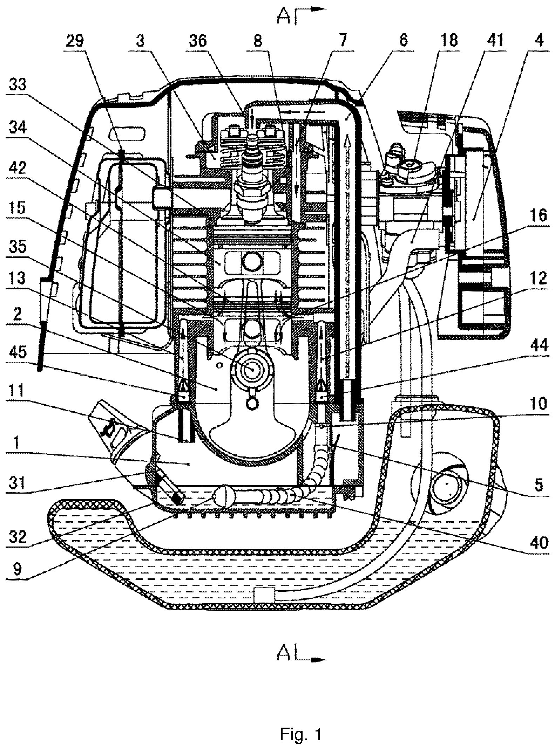

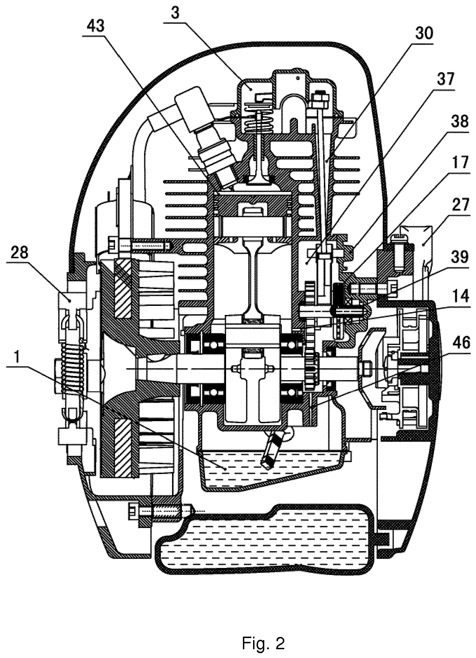

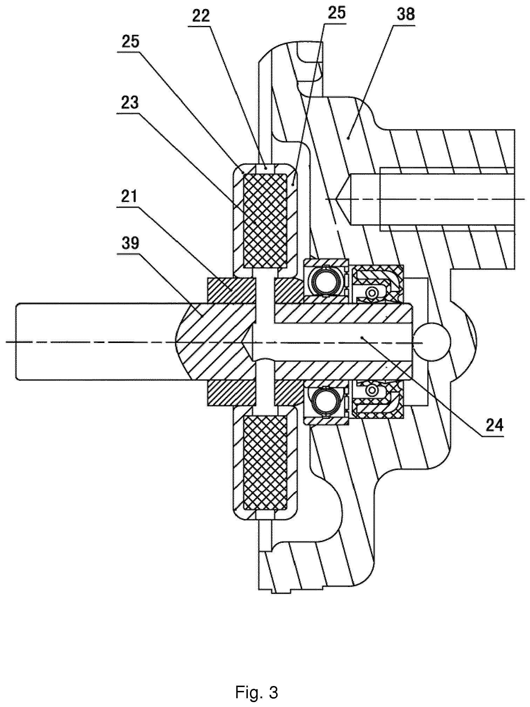

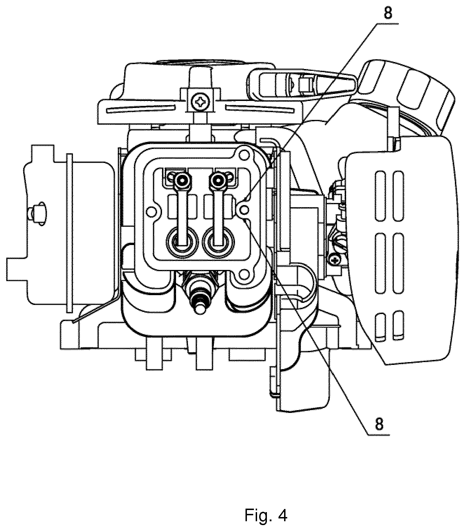

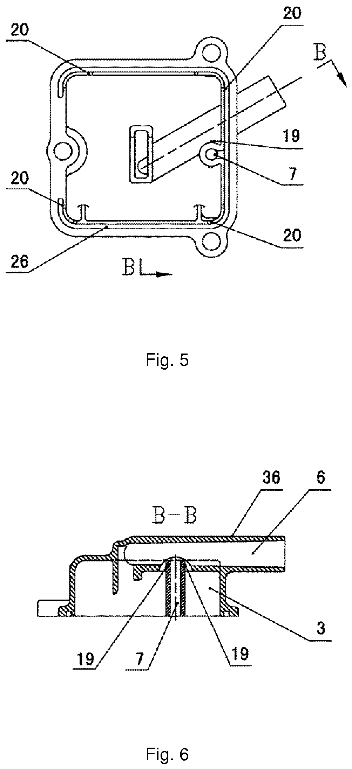

As shown in Fig.1 to Fig.6, an embodiment of a handheld four-stroke engine lubricating system in accordance with the present invention includes: an oil storage chamber 1 formed by a bottom casing 32 and a lower crank case 31, a crankshaft chamber 2 formed by the lower crank case 31 and an upper crank case 33, an air valve chamber 3 formed by the upper crank case 33 and a cylinder head cover 36, a cam chamber 37 formed by the upper crank case 33 and a cam chamber cover 38, and a tappet chamber 30 connected between the air valve chamber 3 and the cam chamber 37, a crankshaft-connecting rod assembly 35 and a piston 34 installed in the crankshaft chamber 2, a carburetor 18 is connected with a fuel tank, wherein the two sides of the upper and lower crank cases 33, 31 are correspondingly provided with a first and a second oil inlet passages 12, 13 communicating with the oil storage chamber 1 and the crankshaft chamber 2, the first and the second oil inlet passages 12, 13 are correspondingly provided with a first and a second check valves 44, 45 thereon, the first oil inlet passage 12 is communicated with the crankshaft chamber 2 through a first oil inlet 16, the second oil inlet passage 13 is communicated with the crankshaft chamber 2 through a second oil inlet 15, the first oil inlet passage 12 is connected to a hose 40 pressed against the bottom casing 32, the head of the hose 40 is provided with a first oil suction port 9, the first oil inlet passage 12 is provided with a second oil suction port 10, and the second oil inlet passage 13 is provided with a third oil suction port 11.

An oil feeding passage 6 is provided between the crankshaft chamber 2 and the air valve chamber 3, the oil feeding passage is provided with a check valve 5, an oil returning passage 7 is provided between the air valve chamber 3 and the oil storage chamber 1, a third oil inlet passage 14 is provided between the cam chamber 37 and the crankshaft chamber 2, and a cam chamber oil returning passage 46 is provided between the cam chamber 37 and the oil storage chamber 1. A bottom of the air valve chamber 3 is provided with at least one forward oil returning hole 8 communicating with oil returning passage 7, the cylinder head cover 36 is provided with an annular oil returning slot 26 communicating with the oil returning passage 7, each of four orientations , i.e. the front, the back, the left and the right, around the cylinder head cover 36 is provided with at least one side oil returning hole 20 communicating with the annular oil returning slot 26, and a top of the cylinder head cover 36 is provided with a reverse oil returning hole 19 communicating with the oil returning passage 7.

A camshaft 39 provided with a centrifugal separation mechanism 17 is installed in the cam chamber 37. The centrifugal separation mechanism includes a separator housing 25, a fixing sleeve 21 and a sieve 23. The separator housing 25 is provided with a hollow cavity, and the sieve 23 is arranged in the hollow cavity. The fixing sleeve 21 is fixed on the inner ring of the separator housing 25 and is assembled to the camshaft 39. The outer ring of the separator housing 25 is provided with a centrifugal air inlet 22 communicating with the hollow cavity. The inner ring of the separator housing 25, the fixing sleeve 21 and the camshaft 39 are provided with a centrifugal air out passage 24 communicating with the hollow cavity. The centrifugal air out passage 24 connects with an air filter 4 through a respiring passage 41.

The operating principle of the present invention is as follows:

When the engine is uprightly placed and operates, as shown in Figs 1, 2, 3, 4, 5, and 6, the engine starts a cycle, the crankshaft starts to rotate, and the lower edge of the piston 34 moved upwardly to the position of the first oil inlet 16 and the second oil inlet 15 from a bottom dead center 42. During this process, a negative pressure is formed in the crankshaft chamber 2, and a mixture of fresh air and redundant oil mist in the cam chamber 37 is sucked into the crankshaft chamber 2 through the third oil inlet passage 14. During the high speed rotation of the centrifugal separation mechanism 17, the oil mist enters into the separator housing 25 from the centrifugal air inlet 22, and the oil mist is separated into oil drop and air when it passes through the small space in the sieve 23. The separated lubricating oil drops and the fresh air are sucked back into the cam chamber 37 under the negative pressure formed by the piston 34, and the fresh air in the air filter 4 is sucked into the centrifugal separation mechanism 17.

The crankshaft continues to rotate; the lower edge of the piston 34 continues to move upwardly from the position of the first oil inlet 16 and the second oil inlet 15 until the position of the top dead center 43. The first oil inlet 16 and the second oil inlet 15 of the upper crank case 33 are opened during the moving of the piston 34. The first oil inlet passage 12 and the second oil inlet passage 13 which connect the crankshaft chamber 2 and the oil storage chamber 1 are opened simultaneously. The fresh air in the air filter 4 is sucked into the centrifugal separation mechanism 17, and the fresh air in the centrifugal separation mechanism 17 and the separated oil drops are sucked into the cam chamber 37. The oil mist in the cam chamber 37 is sucked into the air valve chamber 3, and the redundant lubricating oil in the air valve chamber 3 is sucked back into the oil storage chamber 1 through the forward oil returning hole 8 by the strong negative pressure. The lubricating oil in the oil storage chamber 1 is sucked by the first oil suction port 9 below the oil level, and is sucked into the crankshaft chamber 2 through the first check valve 44 and the first oil inlet passage 12 by the strong negative pressure formed by the upwardly moving of the piston 34. At the same time, the mixed gas in the oil storage chamber 1 is divide into two branches by the second oil suction port 10 and the third oil suction port 11 above the oil level and respectively enters into the crankshaft chamber 2, with one branch being sucked into the crankshaft chamber 2 through the second oil suction port 10, the first check valve 44 and the first oil inlet passage 12 by the strong negative pressure formed by the upwardly moving of the piston 34, and the other branch being sucked into the crankshaft chamber 2 through the third oil suction port 11, the second check valve 45 and the second oil inlet passage 13 by the strong negative pressure formed by the upwardly moving of the piston 34. The lubricating oil and the mixed gas which are sucked into the crankshaft chamber 2 are converted into the oil mist under the rotation of the crankshaft-connecting rod assembly 35.

The crankshaft continues to rotate. During the piston 34 moving downwardly from the top dead center 43 to the bottom dead center 42, a positive pressure is formed in the crankshaft chamber 2, the first check valve 44 in the first oil inlet passage 12 and the second check valve 45 in the second oil inlet passage 13 are closed, the check valve 5 opening into the air valve chamber 3 is opened, and the oil mist in the crankshaft chamber 2 enters into the air valve chamber 3 through the oil feeding passage 6 under the strong pressure. A part of oil mist in the air valve chamber 3 enters into the cam chamber 37 through the tappet chamber 30 under the pressure. The redundant escaping gas in the cam chamber 37 enters into the centrifugal separation mechanism 17 under the pressure. With the separating by rotation of the centrifugal separation mechanism 17, the separated oil drops are returned into the cam chamber 37, and the separated exhaust gas enters into the air filter 4.

When the engine stops, the remaining lubricating oil in the cam chamber 37 flows back into the oil storage chamber 1 from the cam chamber oil returning passage 46, and the remaining lubricating oil in the air valve chamber 3 returns into the oil storage chamber 1 through the forward oil returning hole 8 and the oil returning passage 7.

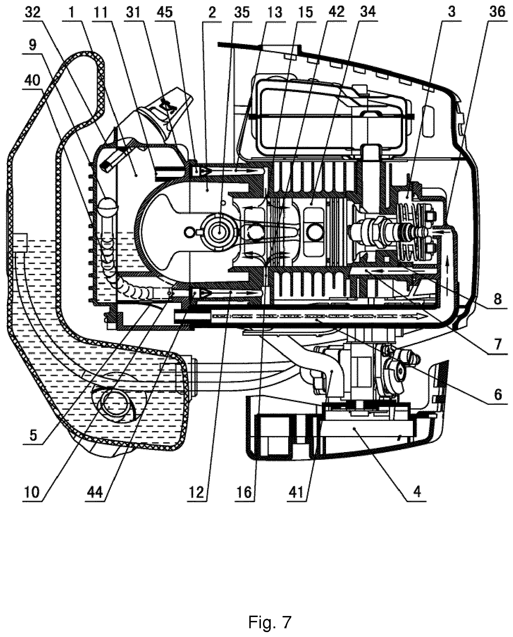

As shown in Fig. 7, the engine works laterally and the air filter 4 is located downwards. When the lower edge of the piston 34 moves upwardly from the position of the bottom dead center 42 to the position of the first oil inlet 16 and the second oil inlet 15, the operating principle of the engine is the same as the upright operation, and is no longer repeated here.

The crankshaft continues to rotate. During the lower edge of the piston 34 moving upwardly from the position of the first oil inlet 16 and the second oil inlet 15 to the position of the top dead center 43, the first check valve 44 provided in the first oil inlet passage 12 and the second check valve 45 provided in the second oil inlet passage 13 are opened simultaneously. At this time, the first oil suction port 9 on the hose 40 is above the oil level, the third oil suction port 11 on the second oil inlet passage 13 is above the oil level, and the second oil suction port 10 on the first oil inlet passage 12 is below the oil level. The lubricating oil is sucked into the crankshaft chamber 2 through the second oil suction port 10, the first check valve 44 and the first oil inlet passage 12 by the strong negative pressure formed by the moving upwardly of the piston 34. One branch of the mixed gas through the third oil suction port 11, the second check valve 45 and the second oil inlet passage 13, the other branch of the mixed gas through the first oil suction port 9, the hose 40, the first check valve 44 and the first oil inlet passage 12, are sucked into the crankshaft chamber 2 by the strong negative pressure formed by the upwardly moving of the piston 34. It can ensure suction of the oil and the oil mist when operating in this orientation. The lubricating oil sucked into the crankshaft chamber 2 is converted into the oil mist by the moving of the crankshaft-connecting rod assembly 35 and the piston 34. The remaining lubricating oil and oil mist in the air valve chamber 3 are sucked back into the oil storage chamber 1 under the strong negative pressure through the at least one oil returning hole 20 disposed at the lower position in the four orientations, i.e. the front, the back, the left and the right in the air valve chamber 3, and the oil returning passage 7. The redundant oil mist in the cam chamber 37 is sucked back into the air valve chamber 3, and the fresh air in the centrifugal separation mechanism 17 and the separated lubricating oil by rotating are sucked into the cam chamber 37. The fresh air in the air filter 4 is sucked into the centrifugal separation mechanism 17. Since the centrifugal separation mechanism 17 is at the middle position within the cam chamber 37, the lubricating oil and the gas can be separated in any orientation.

The crankshaft continues to rotate. The process of the piston 34 downwardly moving from the top dead center 43 to the bottom dead center 42 is the same as the engine operating in the upright manner, and is no longer repeated here.

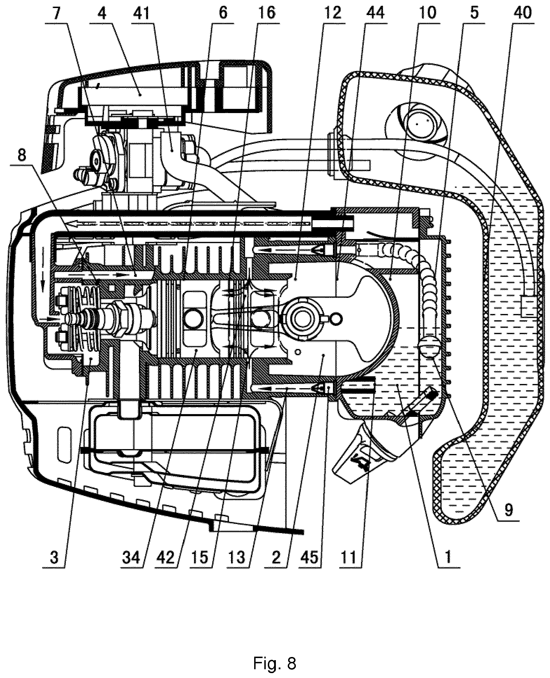

As shown in Fig. 8, the engine works laterally and the muffler 29 is located downwards. When the lower edge of the piston 34 moves upwardly from the position of the bottom dead center 42 to the position of the first oil inlet 16 and the second oil inlet 15, the operating principles of the engine is the same as the upright operation, and no longer repeat here.

The crankshaft continues to rotate. During the lower edge of the piston 34 moving upwardly from the position of the first oil inlet 16 and the second oil inlet 15 to the position of the top dead center 43, the first check valve 44 provided in the first oil inlet passage 12 and the second check valve 45 provided in the second oil inlet passage 13 are opened simultaneously. At this time, the first oil suction port 9 on the hose 40 is below the oil level, the third oil suction port 11 on the second oil inlet passage 13 is below the oil level, and the second oil suction port 10 is above the oil level. One branch of the lubricating oil through the third oil suction port 11, the second check valve 45 and the second oil inlet passage 13, the other branch of the lubricating oil through the first oil suction port 9, the hose 40, the first check valve 44 and the first oil inlet passage 12, are sucked into the crankshaft chamber 2 by the strong negative pressure formed by the upwardly moving of the piston 34. The mixed gas is sucked into the crankshaft chamber 2 through the second oil suction port 10, the first check valve 44 and the first oil inlet passage 12 by the strong negative pressure formed by the moving upwardly of the piston 34. It can ensure suction of the oil and the oil mist when operating in this orientation. The lubricating oil sucked into the crankshaft chamber 2 is converted into the oil mist by the moving of the crankshaft-connecting rod assembly 35 and the piston 34. The remaining lubricating oil and oil mist in the air valve chamber 3 are sucked back into the oil storage chamber 1 through the at least one oil returning hole 20 disposed at the lower position in the four orientations in the air valve chamber 3, and the oil returning passage 7 under the strong negative pressure. The redundant oil mist in the cam chamber 37 is sucked back into the air valve chamber 3, and the fresh air in the centrifugal separation mechanism 17 and the rotating separated lubricating oil are sucked into the cam chamber 37. The fresh air in the air filter 4 is sucked into the centrifugal separation mechanism 17. Since the centrifugal separation mechanism 17 is at the middle position within the cam chamber 37, the lubricating oil and the gas can be separated in any orientation.

The crankshaft continues to rotate. The process of the piston 34 moving downwardly from the top dead center 43 to the bottom dead center 42 is the same as the engine operating in the upright manner, and is no longer repeated here.

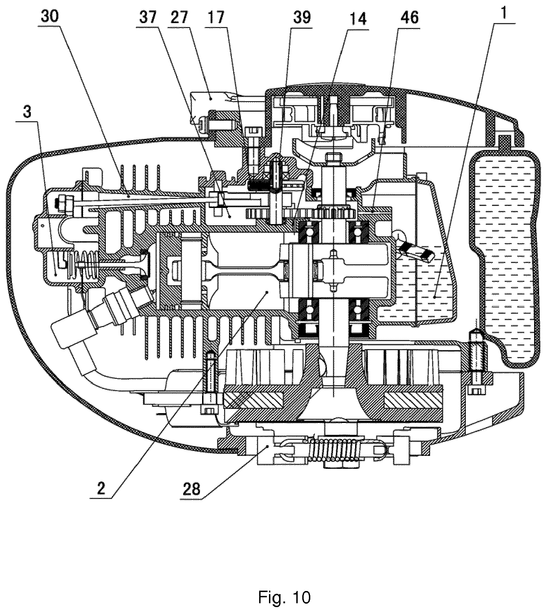

As shown in Fig. 10, the engine works laterally and the clutch mechanism 28 is located downwards. When the lower edge of the piston 34 moves upwardly from the position of the bottom dead center 42 to the position of the first oil inlet 16 and the second oil inlet 15, the operating principle of the engine is same as the upright operation, and is no longer repeated here.

The crankshaft continues to rotate. During the lower edge of the piston 34 moving upwardly from the position of the first oil inlet 16 and the second oil inlet 15 to the position of the top dead center 43, the first check valve 44 provided in the first oil inlet passage 12 and the second check valve 45 provided in the second oil inlet passage 13 are opened simultaneously. At this time, the first oil suction port 9 on the hose 40 is below the oil level, the third oil suction port 11 on the second oil inlet passage 13 is above the oil level, and the second oil suction port 10 is above the oil level. The lubricating oil is sucked into the crankshaft chamber 2 through the first oil suction port 9, the first check valve 44 and the first oil inlet passage 12 by the strong negative pressure formed by the moving upwardly of the piston 34. The mixed gas is divided into two branches to enter the crankshaft chamber 2, with one branch of the mixed gas through the second oil suction port 10, the first check valve 44 and the first oil inlet passage 12, the other branch of the mixed gas through the third oil suction port 11, the second check valve 45 and the second oil inlet passage 13, are sucked into the crankshaft chamber 2 by the strong negative pressure formed by the upwardly moving of the piston 34. It can ensure suction of the oil and the oil mist when operating in this orientation. The lubricating oil sucked into the crankshaft chamber 2 is converted into the oil mist by the moving of the crankshaft-connecting rod assembly 35 and the piston 34. The remaining lubricating oil and oil mist in the air valve chamber 3 are sucked back into the oil storage chamber 1 under the strong negative pressure through the at least one oil returning hole 20 disposed at the lower position in the four orientations, i.e. the front, the back, the left and the right, in the air valve chamber 3, and the oil returning passage 7. The redundant oil mist in the cam chamber 37 is sucked back into the air valve chamber 3, and the fresh air in the centrifugal separation mechanism 17 and the separated lubricating oil by rotating are sucked into the cam chamber 37. The fresh air in the air filter 4 is sucked into the centrifugal separation mechanism 17. Since the centrifugal separation mechanism 17 is at the middle position within the cam chamber 37, the lubricating oil and the gas can be separated in any orientation.

The crankshaft continues to rotate. The process of the piston 34 downwardly moving from the top dead center 43 to the bottom dead center 42 is the same as the engine operating in the upright manner, and is no longer repeated here.

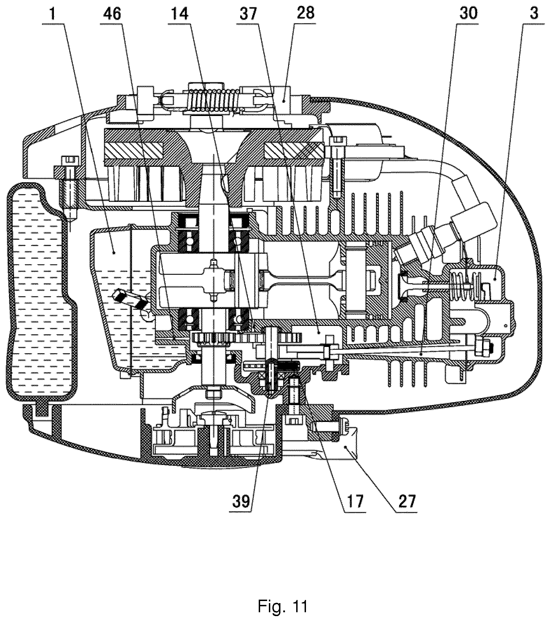

As shown in Fig. 11, the engine works laterally and the hand pulling start mechanism 27 is located downwards. The operating principle of the engine is same as the above mentioned operating principle when the engine works laterally and the clutch mechanism 28 is located downwards, and is no longer repeated here.

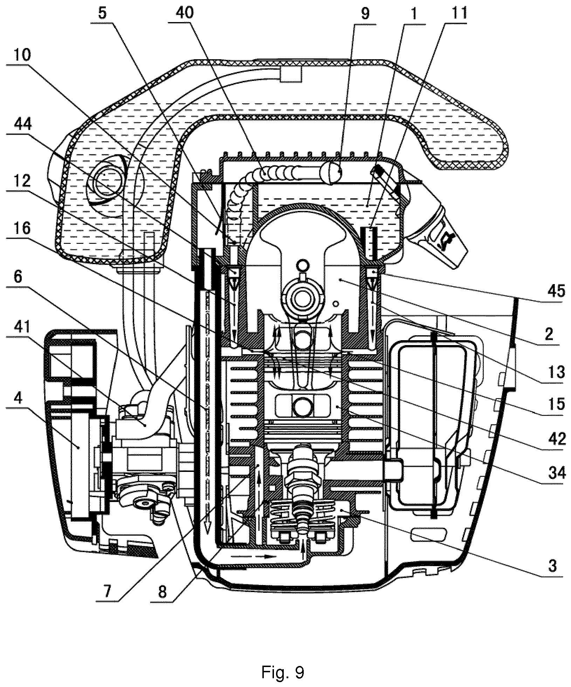

When the engine operates upside down, as shown in Fig. 9, the lower edge of the piston 34 moved upwardly to the position of the first oil inlet 16 and the second oil inlet 15 from a bottom dead center 42, the operation of the engine is the same as the engine operating in the upright manner, and is no longer repeated here.

The crankshaft continues to rotate. During the lower edge of the piston 34 moving upward from the position of the first oil inlet 16 and the second oil inlet 15 to the position of the top dead center 43, the first check valve 44 provided in the first oil inlet passage 12 and the second check valve 45 provided in the second oil inlet passage 13 are opened simultaneously. At this time, the first oil suction port 9 on the hose 40 is above the oil level, the third oil suction port 11 on the second oil inlet passage 13 is below the oil level, and the second oil suction port 10 is below the oil level. One branch of the lubricating oil through the third oil suction port 11, the second check valve 45 and the second oil inlet passage 13, the other branch of the lubricating oil through the second oil suction port 10, the first check valve 44 and the first oil inlet passage 12, are sucked into the crankshaft chamber 2 by the strong negative pressure formed by the upward moving of the piston 34. The mixed gas is sucked into the crankshaft chamber 2 through the first oil suction port 9, the first check valve 44 and the first oil inlet passage 12 by the strong negative pressure formed by the moving upwardly of the piston 34. It can ensure suction of the oil and the oil mist when operating in this orientation. The lubricating oil sucked into the crankshaft chamber 2 is converted into the oil mist by the moving of the crankshaft-connecting rod assembly 35 and the piston 34. The remaining lubricating oil and oil mist in the air valve chamber 3 are sucked back into the oil storage chamber 1 under the strong negative pressure through the at least one reverse oil returning hole 19 disposed at the lower position in the air valve chamber 3, and the oil returning passage 7. The redundant oil mist in the cam chamber 37 is sucked back into the air valve chamber 3, and the fresh air in the centrifugal separation mechanism 17 and the separated lubricating oil are sucked into the cam chamber 37. The fresh air in the air filter 4 is sucked into the centrifugal separation mechanism 17. Since the centrifugal separation mechanism 17 is at the middle position within the cam chamber 37, the lubricating oil and the gas can be separated in any orientation.

The crankshaft continues to rotate. The process of the piston 34 moving downward from the top dead center 43 to the bottom dead center 42 is the same as the engine operating in the upright manner, and is no longer repeated here.

## Claims

1. A handheld four-stroke engine lubricating system comprising: an oil storage chamber (1) formed by a bottom casing (32) and a lower crank case (31), a crankshaft chamber (2) formed by the lower crank case (31) and an upper crank case (33), an air valve chamber (3) formed by the upper crank case (33) and a cylinder head cover (36), a cam chamber (37) formed by the upper crank case (33) and a cam chamber cover (38), and a tappet chamber (30) connected between the air valve chamber (3) and the cam chamber (37), **characterized in that** two sides of the upper and lower crank cases (33, 31) are correspondingly provided with a first and a second oil inlet passages (12, 13) communicating with the oil storage chamber (1) and the crankshaft chamber (2), the first and the second oil inlet passages (12, 13) are correspondingly provided with a first and a second check valves (44, 45) thereon, the first oil inlet passage (12) is connected to a hose (40) pressed against the bottom casing (32), a head of the hose (40) is provided with a first oil suction port (9), the first oil inlet passage (12) is provided with a second oil suction port (10), and the second oil inlet passage (13) is provided with a third oil suction port (11),
**Characterised in that**
a camshaft (39) provided with a centrifugal separation mechanism (17) is installed in the cam chamber (37), and the centrifugal separation mechanism includes a separator housing (25), a fixing sleeve (21) and a sieve (23), wherein the separator housing (25) is provided with a hollow cavity, the sieve (23) is installed in the hollow cavity, the fixing sleeve (21) is fixed on an inner ring of the separator housing (25) and is assembled to the camshaft (39), an outer ring of the separator housing (25) is provided with a centrifugal air inlet (22) communicating with the hollow cavity, the inner ring of the separator housing (25), the fixing sleeve (21) and the camshaft (39) are provided with a centrifugal air out passage (24) communicating with the hollow cavity, and the centrifugal air out passage (24) connects with an air filter (4) through a respiring passage (41).

2. The handheld four-stroke engine lubricating system according to claim 1,
**characterized in that** an oil feeding passage (6) is provided between the crankshaft chamber (2) and the air valve chamber (3), the oil feeding passage (6) is provided with a check valve (5), an oil returning passage (7) is provided between the air valve chamber (3) and the oil storage chamber (1), a third oil inlet passage (14) is provided between the cam chamber (37) and the crankshaft chamber (2), and a cam chamber oil returning passage (46) is provided between the cam chamber (37) and the oil storage chamber (1).

3. The handheld four-stroke engine lubricating system according to claim 2,
**characterized in that** a bottom of the air valve chamber (3) is provided with at least one forward oil returning hole (8) communicating with an oil returning passage (7), the cylinder head cover (36) is provided with an annular oil returning slot (26) communicating with the oil returning passage (7), each of four orientations, i.e. the front, the back, the left and the right, around the cylinder head cover (36) is provided with at least one side oil returning hole (20) communicating with the annular oil returning slot (26), and a top of the cylinder head cover (36) is provided with at least one reverse oil returning hole (19) communicating with the oil returning passage (7).

## Patentansprüche

1. Ein Schmiersystem für einen handgehaltenen Viertaktmotor, aufweisend: eine Ölspeicherkammer (1), die von einem Untergehäuse (32) und einem unteren Kurbelgehäuse (31) gebildet wird, eine Kurbelwellenkammer (2), die von dem unteren Kurbelgehäuse (31) und einem oberen Kurbelgehäuse (33) gebildet wird, eine Luftventilkammer (3), die von dem oberen Kurbelgehäuse (33) und einer Zylinder-kopfabdeckung (36) gebildet wird, eine Nockenkammer (37), die von dem oberen Kurbelgehäuse (33) und einer Nockenkammerabdeckung (38) gebildet wird, und eine Stößelkammer (30), die zwischen der Luftventilkammer (3) und der Nockenkammer (37) verbunden ist, **dadurch gekennzeichnet, dass** zwei Seiten der oberen und unteren Kurbelgehäuse (33, 31) entsprechend mit einem ersten und einem zweiten Öleinlassdurchgang (12, 13) versehen sind, die mit der Ölspeicherkammer (1) und der Kurbelwellenkammer (2) kommunizieren, wobei die ersten und zweiten Öleinlassdurchgänge (12, 13) entsprechend mit einem ersten und einem zweiten Rückschlagventil (44, 45) darauf versehen sind, wobei der erste Öleinlassdurchgang (12) mit einem Schlauch (40) verbunden ist, der gegen das Untergehäuse (32) gepresst ist, wobei ein Kopf des Schlauchs (40) mit einem ersten Ölansauganschluss (9) versehen ist, wobei der erste Öleinlassdurchgang (12) mit einem zweiten Ölansauganschluss (10) versehen ist und der zweite Öleinlassdurchgang (13) mit einem dritten Ölansauganschluss (11) versehen ist,
**dadurch gekennzeichnet, dass** eine Nockenwelle (39), die mit einem Fliehkraftabscheidemechanismus (17) versehen ist, in der Nockenkammer (37) installiert ist, und der Fliehkraftabscheidemechanismus ein Abscheidergehäuse (25), eine Fixierungsmuffe (21) und ein Sieb (23) umfasst, wobei das Abscheidergehäuse (25) mit einer hohlen Aussparung versehen ist, das Sieb (23) in der hohlen Aussparung installiert ist, die Fixierungsmuffe (21) auf einem inneren Ring des Abscheidergehäuses (25) fixiert ist und mit der Nockenwelle (39) zusammengebaut ist, ein äußerer Ring des Abscheidergehäuses (25) mit einem Fliehkraftlufteinlass (22) versehen ist, der mit der hohlen Aussparung kommuniziert, und der innere Ring des Abscheidergehäuses (25), die Fixierungsmuffe (21) und die Nockenwelle (39) mit einem Fliehkraftluftausgang (24) versehen sind, der mit der hohlen Aussparung kommuniziert, und der Fliehkraftluftausgang (24) durch einen atmenden Durchgang (41) mit einem Luftfilter (4) verbindet.

2. Das Schmiersystem für einen handgehaltenen Viertaktmotor nach Anspruch 1,
**dadurch gekennzeichnet, dass** ein Ölzuführungsdurchgang (6) zwischen der Kurbelwellenkammer (2) und der Luftventilkammer (3) bereitgestellt ist, welcher Ölzuführungsdurchgang (6) mit einem Rückschlagventil (5) versehen ist, ein Ölrückführungsdurchgang (7) zwischen der Luftventilkammer (3) und der Ölspeicherkammer (1) bereitgestellt ist, ein dritter Öleinlassdurchgang (14) zwischen der Nockenkammer (37) und der Kurbelwellenkammer (2) bereitgestellt ist, und ein Nockenkammerölrückführungsdurchgang (46) zwischen der Nockenkammer (37) und der Ölspeicherkammer (1) bereitgestellt ist.

3. Das Schmiersystem für einen handgehaltenen Viertaktmotor nach Anspruch 2,
**dadurch gekennzeichnet, dass** eine Unterseite der Luftventilkammer (3) mit mindestens einem vorwärtigen Ölrückführungsloch (8) versehen ist, das mit einem Ölrückführungsdurchgang (7) kommuniziert, die Zylinderkopfabdeckung (36) mit einem ringförmigen Ölrückführungsschlitz (26) versehen ist, der mit dem Ölrückführungsdurchgang (7) kommuniziert, jede der vier Orientierungen, d.h. vorn, hinten, links und rechts, um die Zylinderkopfabdeckung (36) mit mindestens einem seitlichen Ölrückführungsloch (20) versehen ist, das mit dem ringförmigen Ölrückführungsschlitz (26) kommuniziert, und eine Oberseite der Zylinderkopfabdeckung (36) mit mindestens einem umgekehrten Ölrückführungsloch (19) versehen ist, das mit dem Ölrückführungsdurchgang (7) kommuniziert.

## Revendications

1. Système de lubrification de moteur à quatre temps portatif comprenant : une chambre de stockage d'huile (1) formée par un carter inférieur (32) et un carter moteur inférieur (31), une chambre de vilebrequin (2) formée par le carter moteur inférieur (31) et un carter moteur supérieur (33), une chambre de valve à air (3) formée par le carter moteur supérieur (33) et un couvercle de tête de cylindre (36), une chambre de came (37) formée par le carter moteur supérieur (33) et un couvercle de chambre de came (38), et une chambre de poussoir (30) reliée entre la chambre de valve à air (3) et la chambre de came (37), **caractérisé en ce que** deux côtés des carters moteur supérieur et inférieur (33, 31) sont dotés de manière correspondante d'un premier et d'un second passage d'entrée d'huile (12, 13) communiquant avec la chambre de stockage d'huile (1) et la chambre de vilebrequin (2), les premier et les second passage d'entrée d'huile (12, 13) sont dotés de manière correspondante d'un premier et d'un second clapet antiretour (44, 45) dessus, le premier passage d'entrée d'huile (12) est relié à un tuyau (40) pressé contre le carter inférieur (32), une tête du tuyau (40) est dotée d'un premier orifice d'aspiration d'huile (9), le premier passage d'entrée d'huile (12) est doté d'un deuxième orifice d'aspiration d'huile (10) et le second passage d'entrée d'huile (13) est doté d'un troisième orifice d'aspiration d'huile (11), **caractérisé en ce que**
un arbre à came (39) doté d'un mécanisme de séparation centrifuge (17) est installé dans la chambre de came (37), et le mécanisme de séparation centrifuge inclut un boîtier de séparateur (25), un manchon de fixation (21) et un tamis (23), dans lequel le boîtier de séparateur (25) est doté d'une cavité creuse, le tamis (23) est installé dans la cavité creuse, le manchon de fixation (21) est fixé sur un anneau intérieur du boîtier de séparateur (25) et est assemblé à l'arbre à came (39), un anneau extérieur du boîtier de séparateur (25) est doté d'une entrée d'air centrifuge (22) communiquant avec la cavité creuse, l'anneau intérieur du boîtier de séparateur (25), le manchon de fixation (21) et l'arbre à came (39) sont dotés d'un passage de sortie d'air centrifuge (24) communiquant avec la cavité creuse et le passage de sortie d'air centrifuge (24) est relié à un filtre à air (4) par un passage de respiration (41).

2. Système de lubrification de moteur à quatre temps portatif selon la revendication 1, **caractérisé en ce qu'**un passage d'amenée d'huile (6) est prévu entre la chambre de vilebrequin (2) et la chambre de valve à air (3), le passage d'amenée d'huile (6) est doté d'un clapet antiretour (5), un passage de retour d'huile (7) est prévu entre la chambre de valve à air (3) et la chambre de stockage d'huile (1), un troisième passage d'entrée d'huile (14) est prévu entre la chambre de came (37) et la chambre de vilebrequin (2), et un passage de retour d'huile de chambre de came (46) est prévu entre la chambre de came (37) et la chambre de stockage d'huile (1).

3. Système de lubrification de moteur à quatre temps portatif selon la revendication 2, **caractérisé en ce qu'**un fond de la chambre de valve à air (3) est doté d'au moins un trou de retour d'huile vers l'avant (8) communiquant avec un passage de retour d'huile (7), le couvercle de tête de cylindre (36) est doté d'une fente de retour d'huile annulaire (26) communiquant avec le passage de retour d'huile (7), chacune des quatre orientations, c'est-à-dire l'avant, l'arrière, la gauche et la droite autour du couvercle de tête de cylindre (36) est dotée d'au moins un trou de retour d'huile latéral (20) communiquant avec la fente de retour d'huile annulaire (26), et un dessus du couvercle de tête de cylindre (36) est doté d'au moins un trou de retour d'huile inversé (19) communiquant avec le passage de retour d'huile (7).
